# EUROPEAN PATENT SPECIFICATION

(11) **EP 3 705 004 B1**
(45) Date of publication and mention of the grant of the patent: **15.12.2021**
(21) Application number: 20020096.2
(22) Date of filing: 03.03.2020
(51) Int. Cl.: A47J 42/40, A47J 31/40

(54) **DEVICE FOR DOSING COFFEE AND METHOD FOR ADJUSTING THE CHARGING AND DISCHARGING ACTIONS IN SUCH A DEVICE**
VORRICHTUNG ZUM DOSIEREN VON KAFFEE UND VERFAHREN ZUR ANPASSUNG DER LADE- UND ENTLADEVORGÄNGE IN SOLCH EINER VORRICHTUNG
DISPOSITIF DE DOSAGE DE CAFÉ ET PROCÉDÉ POUR RÉGLER LES ACTIONS DE CHARGEMENT ET DE DÉCHARGEMENT DANS UN TEL DISPOSITIF

(30) Priority: 04.03.2019 IT 201900003067
(43) Date of publication of application: 09.09.2020
(73) Proprietor: Obel s.r.l., 20122 Milano (IT)
(72) Inventor: Ditrani, Marco, I-27022 Casorate Primo (PV) (IT); Di Dio, Francesco, I-27022 Casorate Primo (PV) (IT)
(74) Representative: Contessini, Pier Carlo

(56) References cited:
- EP-A1- 3 409 155
- WO-A2-2010/033023
- IT-A1- MC20 100 037
- US-A1- 2013 032 611

## Description

### Field of the invention

The present invention relates to a device for dosing coffee and method for adjusting the charging and discharging actions in such a device. In particular, the present invention relates to a coffee dosing device capable of rapidly dispensing coffee doses.

### Background.

Coffee dosing machines are known in the art.

For example, the Spanish patent no. ES 22137811 refers to a device designed to be coupled to the outlet of a coffee grinder allowing to automatically dispense one or two coffee doses. The coffee grinder is expected to start operating immediately after removing the respective coffee dose, in order to grind an amount equal to the taken dose.

This device includes an upper chamber communicating with the coffee grinder outlet and bifurcates into two ducts below. In coincidence with the aforementioned bifurcation, a door is provided allowing, depending on its position, to divert the ground coffee towards one or the other duct. These two ducts have hatches at their lower ends allowing, once closed, to store the ground coffee, while when they are open they allow to store the coffee in a special container, such as a coffee cup. This arrangement allows for two ground coffee stores, one containing the dose needed to make one coffee and the other one the dose to make two coffees.

The Spanish patent no. ES 2212683 describes a device similar to the one previously mentioned, but uses some ports operated by independent electric motors as output ports for both channels and as a bifurcation gate.

Furthermore, the Spanish patent application no. ES 2274738 refers to a coffee dosing device capable of increasing the dosing capacity of the outlet ducts, so that up to four different doses can be stored and supplied. Each of the vertical ducts is divided into two compartments by adding an intermediate door in each duct, so that two different doses can be stored in each outlet duct.

EP 3409155 A1 discloses a dosing device for dispensing predetermined doses of ground coffee into a filter holder of an espresso coffee machine with a motor assembly being located outside a dosing chamber carousel.

Therefore, in the patents known in the art an attempt has been made to solve the problem of dispensing a greater number of coffee doses (up to four).

However, at present, commercially available coffee grinders have the disadvantage of having two overlapping compartments to accommodate ground coffee doses. This causes a waste of time, since the cycle to open the two compartments in succession takes a few seconds before the machine starts dispensing the number of coffee doses required.

Although this time loss is irrelevant in a service where a few coffee doses are dispensed at a certain time distance one each other, in other services, such as in premises used as canteens or bars with a high number of customers, typically concentrated all in the same period of time (at breakfast, or after lunch, for example), this waste of time in dispensing coffee doses must be multiplied by the high number of customers, ultimately causing a serious waiting problem.

Therefore, the Applicant of this patent application has noted the need to create a coffee grinder machine that saves time in the final product delivery, thus reducing waiting times and consequently improving the service provided efficiency.

### Summary of the invention

According to a first aspect, the present invention refers to a device for dosing coffee such as that one indicated in claim 1.

The present invention stems from the general consideration according to which the technical problem highlighted above can be solved effectively and reliably by means of a device for dosing coffee comprising a main body provided with a support base, an upper cover and a compact unit comprising at least three internally hollow substantially cylindrical integral chambers able to contain at their inside coffee doses and extending between said support base and said cover. Furthermore, said main body is provided with a first opening formed in said cover and a second opening formed in said support base and wherein said compact unit is able to rotate around an axis so that said chambers are able to sequentially assume various configurations. In each of said configurations, in turn, the upper part of only one of said three chambers is located in correspondence of said first opening to be subjected to a coffee dose charging action and only another one of the remaining chambers, in turn, is located in correspondence of said second opening to be subjected to a coffee dose discharge action. Furthermore, the device for dosing coffee of the present invention further comprises a motor designed to activate said rotation of said compact unit together with said chambers.

In this way, the delivery times for coffee doses are accelerated; in fact, as soon as a chamber is discharged, another one of the two remaining chambers, specifically kept empty to facilitate a rapid charging action, is immediately charged.

The device for dosing coffee of the present invention is characterized in that said motor is fixed on said support base of said main body, substantially around the center thereof, and housed in said hollow area radially surrounded by said chambers.

In this way the motor is positioned in the space left free by the three chambers; thus, a further space exploitation is obtained, allowing the motor to occupy that space which would have remained free, as it cannot be used by anyone of the chambers.

The device is essentially applicable to coffee grinders that are part of or are associated, for example, with coffee makers in public houses such as bars, cafes and other catering establishments for the public, and in general wherever coffee is offered to the public.

According to a preferred embodiment, said axis around which said compact group is able to rotate is an axis vertically arranged.

In this way, the compact group vertically develops, facilitating charging and discharging actions.

According to a preferred embodiment, the device of the present invention is positioned below a container for coffee to be ground and above a filter holder.

In this way, the device of the present invention is able to receive the ground coffee from above and to discharge the coffee doses required for the final coffee dispensing into the filter holder below.

According to a preferred embodiment, said support base and said cover of said main body are substantially circular in shape.

According to a preferred embodiment, said three chambers are radially arranged around the center of said support base, preferably arranged at an angle of about 120° one each other, so as to be equidistant one each other.

In this way, the available space on said support base is exploited to the best.

According to a preferred embodiment, said compact unit is further provided with a hollow area vertically arranged around the center of said support base, wherein said chambers are radially arranged around said hollow area.

According to a preferred embodiment, the device for dosing coffee of the present invention further comprises a lever adapted to be activated by said rotation of the compact group in order to strike one of said chambers when it reaches the coffee discharge position in correspondence with the discharge outlet, so as to facilitate the exit of any coffee eventually stuck on the walls of said chamber.

According to a preferred embodiment, said lever is arranged around said main body, in correspondence with the cover.

This further facilitates the automatic actuation of the lever to facilitate the coffee dose discharge.

According to a preferred embodiment, the device for dosing coffee of the present invention further comprises a guide, such as for example a spout positioned in correspondence with said first charging opening.

In this way, the coffee dose charging into the chamber to be charged located at said first charging opening is favored.

According to a preferred embodiment, the device for dosing coffee of the present invention further comprises an electronic board for determining said rotation of the compact group with said chambers, as well as the times for carrying out the charging and discharging actions and the relative coffee dose quantities. According to a preferred embodiment, said electronic board is connected to a microswitch, preferably positioned in correspondence with said cover.

According to a preferred embodiment, said compact group is able to rotate around said axis both clockwise and anti-clockwise according to the discharging needs.

In this way, according to the position wherein an empty chamber to be charged is located, said electronic board will give the instruction for clockwise or anti-clockwise rotation, so that said chamber to be charged takes as little time as possible to dispense the required dose.

According to a preferred embodiment, the device for dosing coffee of the present invention further comprises at least one sensor for determining the presence of the filter holder positioned below the compact group with the chambers.

In this way, if the sensor detects the filter holder absence, the coffee dose required by the charged chamber at the discharging position is avoided to be discharged, as this coffee dose would be lost.

In a second aspect, the present invention refers to a method for regulating the charging and discharging actions in a device for dosing coffee such as that one indicated in claim 7.

The present invention in fact arises from the general consideration according to which the technical problem highlighted above can be solved in an effective and reliable way by a method using the device for dosing coffee as shown above with reference to the first aspect of the present invention.

In particular, the method for adjusting the charging and discharging actions in a device for dosing coffee comprises the steps of:
a) selecting the type and number of coffee doses to be discharged from said chambers;
b) rotating said compact unit of chambers until a chamber filled with coffee doses is in correspondence with said second discharge opening, interrupting the rotation and discharging said charged chamber;
c) restoring an empty chamber, requiring the grinding of a coffee dose equivalent to the dose discharged in step b), rotating said compact unit of chambers until said empty chamber is in correspondence of said first charging opening and charging in it the ground dose,
characterized in that:
- if a double dose has been requested in phase a),
before proceeding to step c), repeat step b) for a second charged chamber, in order to consecutively discharge a first and second charged chamber, and subsequently, after having once performed the phase c) to restore the first discharged chamber, perform again step c) to restore the second discharged chamber;
or,
- if two single doses had been requested in phase a),
after having performed step c), repeat step b) a second time to discharge a second charged chamber and then repeat step c) a second time to restore an empty chamber requiring the grinding of a coffee dose equivalent to the dose discharged from the second charged chamber.

In this way, the delivery times of coffee doses are accelerated; in fact, as soon as a chamber is discharged, another one of the two remaining chambers, kept specifically empty, is immediately recharged with a freshly ground dose to facilitate a quick charging action.

According to a preferred embodiment, the method of the present invention is managed by an electronic board which is capable of determining a series of actions, such as, for example, system initialisation; dose management, such as a single dose, or a double dose; motor activation, clockwise or counterclockwise rotation of the compact unit; grinding of the selected dose; detection of the presence of the filter holder under the charged chamber to be discharged; discharging of the charged chambers; memorizing the chamber charging status when the device is switched on again.

In this way it is possible to automatically manage the various phases of the method of the present invention.

According to a preferred embodiment, it is possible to manage the coffee dose quantity to be ground and to be charged into the empty chambers, such as for example in quantities varying between 4 and 10 g.

According to a preferred embodiment, in the event that a double dose is required, it is possible to select the second dose so that it contains a smaller coffee quantity than the first dose.

Further characteristics and advantages of the present invention will become clearer from examination of the following detailed description of a preferred but not exclusive embodiment, illustrated only by way of non-limitative example, with the support of the accompanying drawings, wherein:
- Figure 1 is an overall view from above of an embodiment of a device for dosing coffee according to the present invention;
- Figure 2 is an overall view from below of the device of Fig. 1;
- Figure 3 is a detail of Fig. 1, wherein the main body without some of its elements is shown;
- Figure 4 is a detail of Fig. 1, which shows the compact group equipped with chambers for coffee doses;
- Figure 5 is an overall view of the device of Fig. 1 applied to a machine for grinding and dispensing coffee;
- Figure 6 shows a schematic situation from above that depicts the three chambers in a charging, discharging and neutral position;
- Figure 7 shows the different configurations of the three chambers in a cycle for dispensing a single coffee dose;
- Figure 8 shows the different configurations of the three chambers in a cycle for dispensing two single coffee doses;
- Figure 9 shows the different configurations of the three chambers in a cycle for dispensing a double coffee dose.

### Detailed description of the invention.

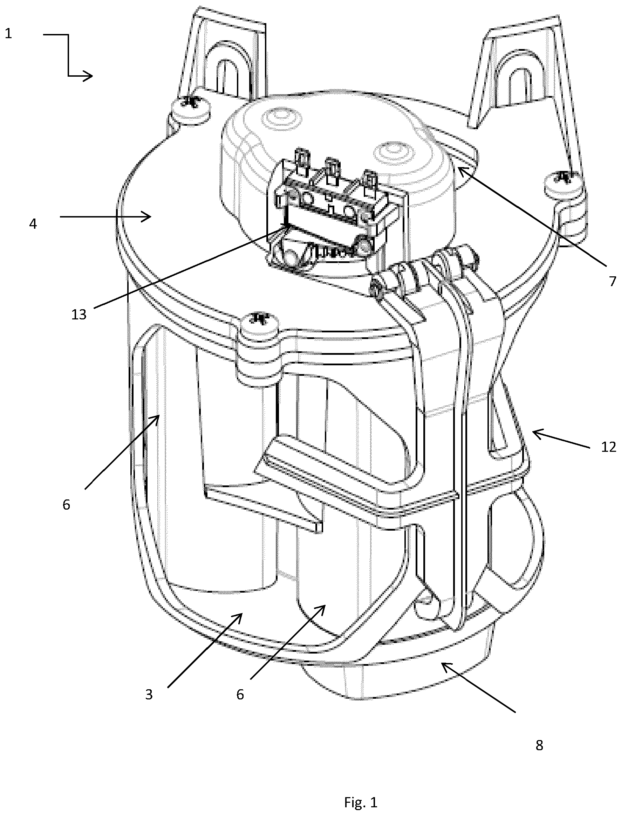

With reference to Figs. 1-4 an embodiment of a device 1 for dosing coffee according to the present invention is shown below.

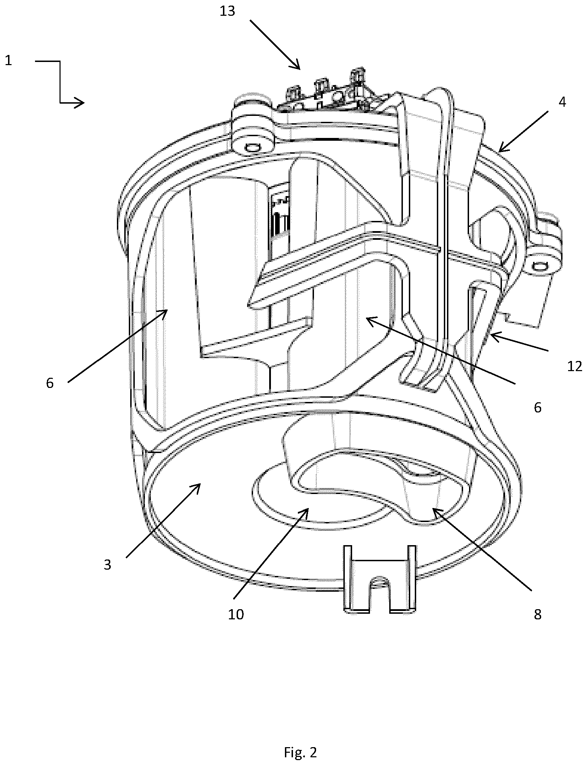

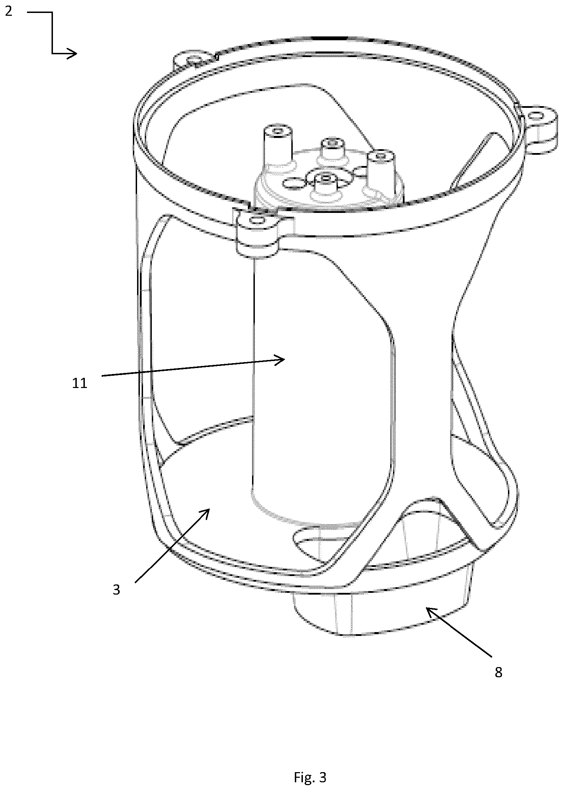

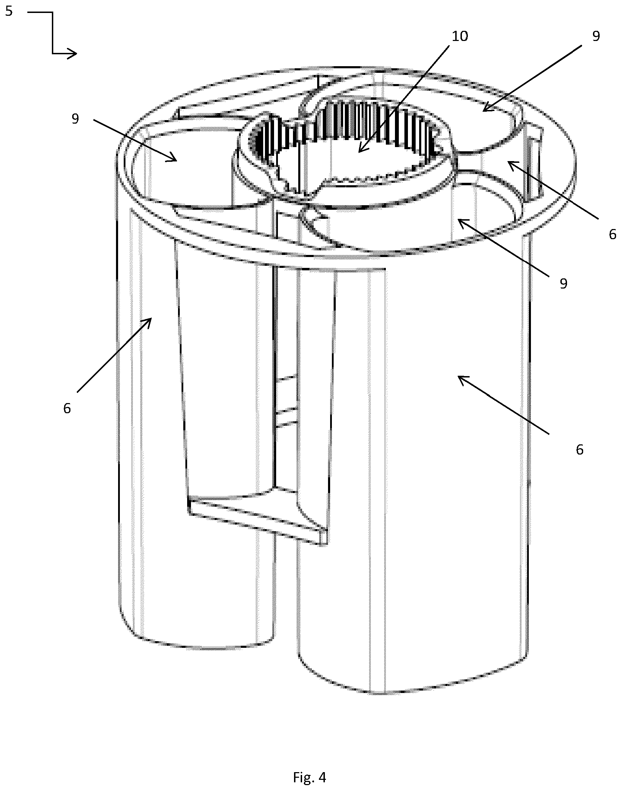

In particular, Figs. 1 and 2 show an overall view, from above and below, of the device 1 for dosing coffee which comprises a main body 2 (shown in detail in Fig. 3) which is provided with an upper lid 4, into which a first opening 7 is obtained, and which is further provided with a support base 3, wherein a second opening 8 is obtained. Both the support base 3 and the cover 4 are substantially circular in shape. Between the support base 3 and the cover 4 there is a compact unit 5 (shown in detail in Fig. 4) comprising three integral chambers 6, each of which is substantially cylindrical in shape and internally hollow, so as to contain coffee doses inside it. The three integral chambers 6 are fixed to the support base 3, and extend vertically from it until they reach the lid 4. At the top, each chamber 6 is provided with an opening 9 for inserting the coffee doses inside the chamber. The compact group 5 is also provided with a hollow area 10 arranged vertically around the center of the support base 3, around which the three chambers 6 are radially arranged, so that they are arranged at an angle of about 120° one each other, so as to be equidistant one each other. In the hollow area there is a motor 11 activated by an electronic board located inside the coffee grinder (not shown in the figures), operated by a microswitch 13.

The compact group 5, when driven by the motor 11, is able to rotate around an axis, preferably vertical, so that the three chambers 6 are able to sequentially take on various configurations, regulated by the microswitch 13. In each of these configurations, the upper opening 9 of only one of the three chambers 6 is in correspondence with the first opening 7 obtained in the lid 4 to be subjected to a coffee dose charging action. Furthermore, in this configuration, only one of the remaining two chambers 6 is located in correspondence with the second opening 8 obtained in the support base 3 to be subjected to a coffee dose discharging action, while the third chamber is in a neutral position, neither charging nor discharging.

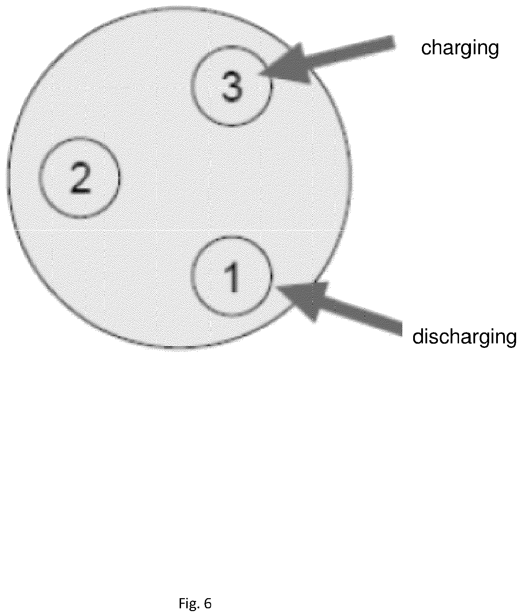

In particular, with reference to Figures 6-9, the charging position is always that one which in Figure 6 is occupied by the chamber indicated with "3", while the discharging position is always that one which in Figure 6 is occupied by the chamber indicated with "1"; vice versa, the neutral position is always that one which in Figure 6 is occupied by the chamber indicated with "2".

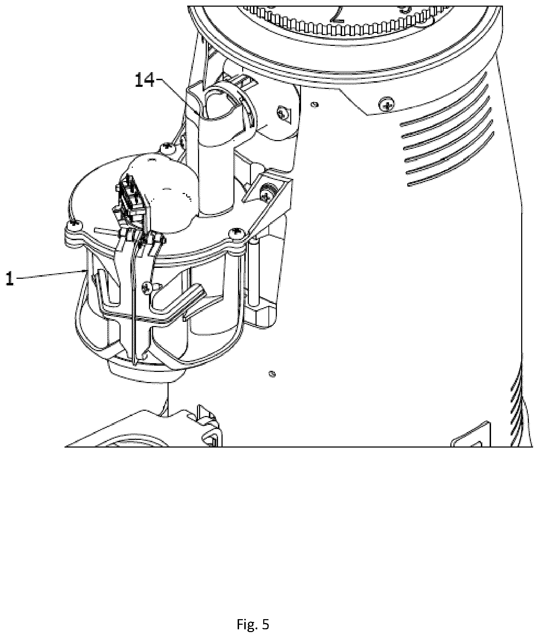

The device 1 is essentially applicable to coffee grinders, as shown in Figure 5, which belong to or are associated, for example, with coffee makers in public houses such as bars, cafes and other catering establishments for the public, and in general wherever the coffee is offered to the public. The device 1 of the present invention is also provided with a spout-shaped guide 14 to facilitate filling of the chamber 6 and a lever 12 to facilitate the coffee dose discharging from the chamber 6. The lever 12 is activated by rotating the compact group 5 in order to strike the chamber 6 when it reaches the coffee discharging position at the discharge opening 8, so as to facilitate the exit of any coffee eventually stuck on the walls of the chamber 6.

The system, as well as other actions, such as the does management (a single dose or a double dose), motor activation, clockwise or counterclockwise rotation of the compact unit; grinding of the selected dose; detection of the presence of the filter holder under the charged chamber to be discharged; discharging the charged chambers; memorizing the chamber charging status when the device is switched on again, are all initiated via the electronic board, operated by the microswitch 13.

Operatively, the user selects a special filter holder (not shown in the figures) based on the delivery of required coffee doses (single dose or double dose) and brings it closer to the device 1 of the present invention. A sensor (not shown in the figures) arranged in correspondence with the device 1 detects the presence of a particular magnet positioned on the filter holder. In this way the device 1 is able to determine whether the filter holder approached to the device 1 is suitable for receiving a single dose or a double dose of coffee, thereby activating the corresponding dispensing cycle.

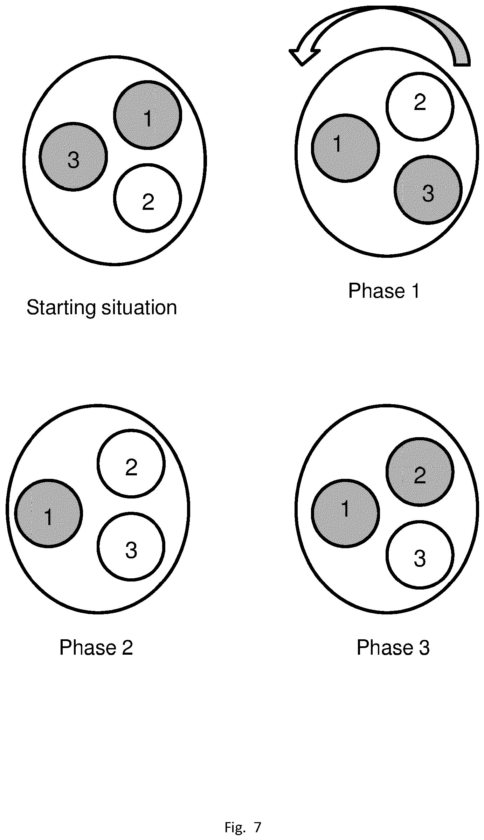

In particular, as shown in Figure 7, when a single dose delivery is selected, the starting situation requires, for example, that the two chambers indicated with "1" and "3" have been charged with the respective doses, where circles with a dark background represent charged chambers, while circles with a light background represent empty charges. In detail, in phase 1 of Figure 7 the chambers "1,2,3" were anti-clockwise rotated, so as to bring the chamber "3" into the discharging position and then subjected to discharging phase (phase 2). Subsequently, in phase 3, chamber "2", which was already in the charging position, is charged. At this point, at the end of phase 3, the two chambers filling was restored (the chamber "1" and the chamber "2").

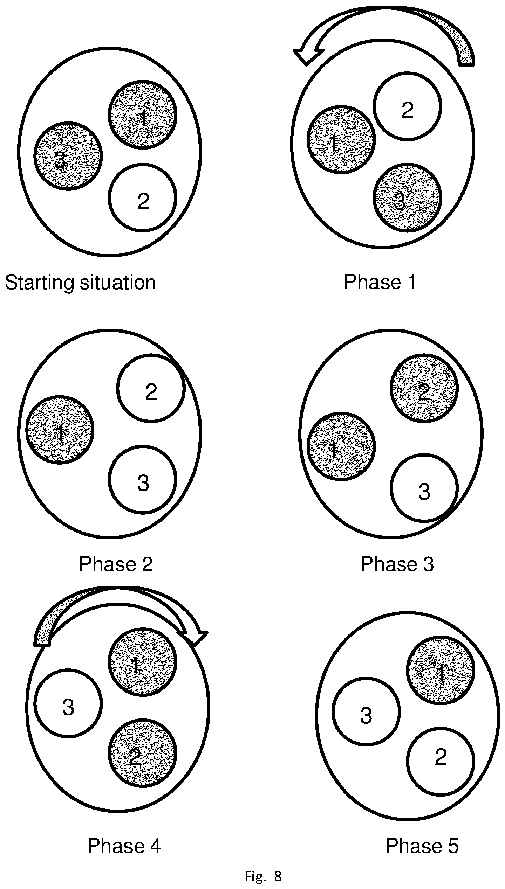

If a delivery of two single doses is selected in succession, steps 1 to 3 shown in Figure 8 are first performed, as described above with reference to the delivery of a single dose (see Figure 7). Subsequently, in Figure 8, phase 4 was performed, wherein the chambers "1,2,3" were clockwise rotated, so as to bring the chamber "2" into the discharging position and then subjected to discharging phase (phase 5). In this way the chamber 3 was first discharged (phase 2) and then chamber 2 was discharged (phase 5).

The delivery cycle of a single dose lasts about 1 second, while the complete recovery cycle lasts only about 4 seconds. Thanks to the presence of three chambers, the waiting times between one delivery and the next one are significantly reduced, as each of the three chambers "1", "2" and "3" is repeatedly charged.

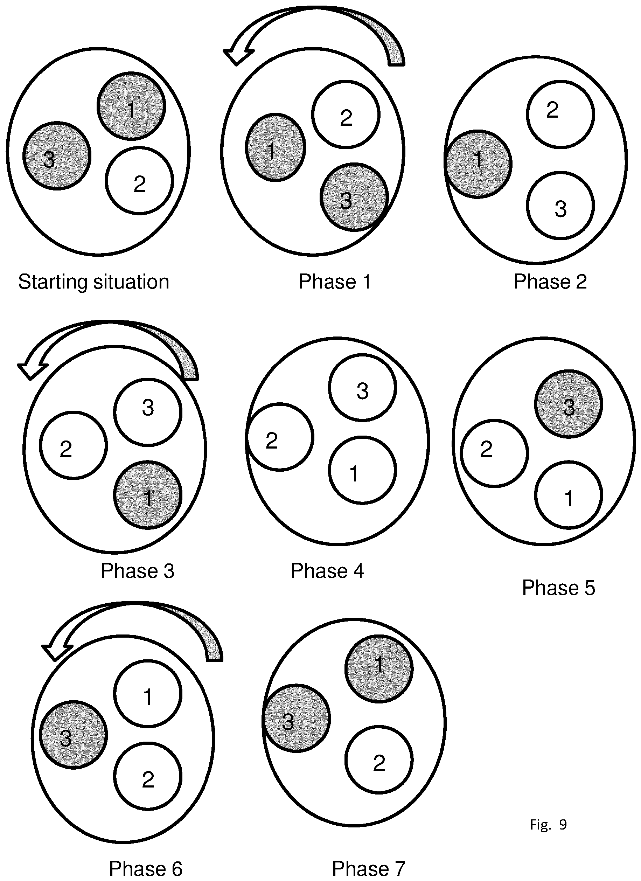

Vice versa, when the delivery of a double dose is selected, as shown in Figure 9, the starting situation is identical to that one seen above for the delivery of a single dose, so that the two chambers indicated with "1" and "3" are charged with the respective doses, and after anti-clockwise rotation (phase 1), chamber "3" is discharged (phase 2). Subsequently, in phase 3 of Figure 8, the chambers "1,2,3" are further rotated in an anti-clockwise direction, so as to bring the chamber "1" (the only one still charged) into the discharge position and then subjected to discharging phase (phase 4). At this point, a double coffee dose has been dispensed and all the chambers are empty. In phase 5, the chamber "3", which was already in the charging position, is charged again; the chambers are further rotated in an anti-clockwise direction (phase 6) to bring the chamber "1" to the charging position and therein re-charged (phase 7). At this point, at the end of phase 7, the filling of two chambers was restored (the chamber "1" and the chamber "3").

The double dose delivery cycle lasts about 2 seconds, while the complete recovery cycle lasts only about 6 seconds. Also in this case, the waiting times between one delivery and the next one are significantly reduced.

Of course, to the persons skilled in the art many modifications and variations of the preferred embodiment described above will be evident, still remaining within the scope of the invention.

For example, by setting the electronic board in the desired way, it is possible to charge the chambers with different doses one each other (for example a dose of 7 grams and a dose of 3.5 grams), in order to satisfy the different requests.

Furthermore, it is possible to manually activate the coffee dose dispensing (instead of automatically as seen above via the sensor and the magnet), by selecting the type of delivery required by pressing the corresponding buttons available on a "touch screen" display.

Therefore, the present invention is not limited to the preferred embodiment herein described, illustrated only by way of non-limiting example, but is defined by the following claims.

## Claims

1. A device for dosing coffee (1) comprising a main body (2) provided with a support base (3), an upper cover (4) and a compact unit (5) comprising at least three internally hollow substantially cylindrical integral chambers (6) able to contain at their inside coffee doses and extending between said support base (3) and said cover (4), wherein said main body (2) is provided with a first opening (7) formed in said cover (4) and a second opening (8) formed in said support base (3) and wherein said compact unit (5) is able to rotate around an axis so that said chambers (6) are able to sequentially assume various configurations for which, in each of said configurations, the upper part (9) of only one of said three chambers (6) is located in correspondence of said first opening (7) to be subjected to a coffee dose charging action and only another one of the remaining chambers (6) is located in correspondence of said second opening (8) to be subjected to a coffee dose discharging action, wherein the device for dosing coffee (1) further comprises a motor (11) designed to activate said rotation of said compact unit (5) with said chambers (6),
**characterized in that** said motor (11) is fixed on said support base (3) of said main body (2), substantially around the center thereof, and housed in said hollow area (10) radially surrounded by said chambers (6).

2. Device for dosing coffee (1) according to claim 1, wherein said support base (3) and said cover (4) of said main body (2) are of substantially circular shape.

3. Device for dosing coffee (1) according to claim 2, wherein said compact unit (5) is further provided with a hollow area (10) vertically arranged around the center of said support base (3), wherein said chambers (6) are radially arranged around said hollow area (10).

4. Device for dosing coffee (1) according to any one of the previous claims, which further comprises a lever (12) adapted to be activated by said rotation of the compact group (5) in order to strike one of said chambers (6) when it reaches the coffee discharge position in correspondence with the discharge opening (8), so as to facilitate the spillage of any coffee eventually stuck on the walls of said chamber (6).

5. Device for dosing coffee (1) according to any of the previous claims, which further comprises an electronic board for determining said rotation of the compact unit (5) with said chambers (6), as well as the times for carrying out charging and discharging actions and the relative coffee dose quantities.

6. Device for dosing coffee (1) according to any one of the preceding claims, wherein said compact unit (5) is able to rotate both in clockwise or in anti-clockwise directions according to the discharging requirements.

7. Method for adjusting the charging and discharging actions in a device for dosing coffee (1) according to any of the claims 1-6, said method comprising the steps of:
a) selecting the type and number of coffee doses to be discharged from said chambers (6);
b) rotating said compact unit (5) of chambers (6) until a chamber (6) filled with coffee doses is in correspondence with said second discharge opening (8), interrupting the rotation and discharging said charged chamber (6);
c) restoring an empty chamber (6), requiring the grinding of a coffee dose equivalent to the dose discharged in step b), rotating said compact unit (5) of chambers (6) until said empty chamber (6) is in correspondence of said first charging opening (7) and charging in it the ground dose,
**characterized in that**:
- if a double dose has been requested in phase a),
before proceeding to step c), repeat step b) for a second charged chamber (6), in order to consecutively discharge a first and second charged chamber (6), and subsequently, after having once performed the phase c) to restore the first discharged chamber, perform again step c) to restore the second discharged chamber;
or,
- if two single doses had been requested in phase a),
after having performed step c), repeat step b) a second time to discharge a second charged chamber (6) and then repeat step c) a second time to restore an empty chamber requiring the grinding of a coffee dose equivalent to the dose discharged from the second charged chamber.

## Patentansprüche

1. Eine Vorrichtung zum Dosieren von Kaffee (1), die einen Hauptkörper (2) umfasst, der mit einer Stützbasis (3), einer oberen Abdeckung (4) und einer kompakten Einheit (5) ausgestattet ist, die wenigstens drei intern hohle, im Wesentlichen zylindrische integrale Kammern (6) umfasst, die in ihrem Inneren Kaffeedosen aufnehmen kann und sich zwischen besagter Stützbasis (3) und besagter Abdeckung (4) erstreckt, wobei besagter Hauptkörper (2) über eine erste Öffnung verfügt (7), die in besagter Abdeckung (4) geformt ist und eine zweite Öffnung (8), die in besagter Stützbasis (3) geformt ist und wobei besagte kompakte Einheit (5) in der Lage ist, um eine Achse zu drehen, so dass besagte Kammern (6) in der Lage sind, nacheinander verschiedene Konfigurationen anzunehmen, für welche, in jeder der besagten Konfigurationen, sich der obere Teil (9) von nur einer der besagten drei Kammern (6) in Entsprechung der besagten ersten Öffnung befindet (7), um einem Beladevorgang von Kaffeedosen unterzogen zu werden und nur eine andere der verbleibenden Kammern (6) in Übereinstimmung mit besagter zweiter Öffnung (8) angeordnet ist, um einem Entladevorgang von Kaffeedosen unterzogen zu werden, wobei die Vorrichtung für die Kaffeedosierung (1) weiter einen Motor umfasst (11), der entworfen wurde, um besagte Drehung der besagten kompakten Einheit (5) mit besagten Kammern (6) zu aktivieren,
dadurch ausgezeichnet, dass besagter Motor (11) auf besagter Stützbasis (3) des besagten Hauptkörpers (2) befestigt ist, im Wesentlichen um dessen Mitte und in besagtem hohlen Bereich (10), der radial von besagten Kammern (6) umgeben ist, untergebracht ist.

2. Vorrichtung zum Dosieren von Kaffee (1) gemäß Anspruch 1, wobei besagte Stützbasis (3) und besagte Abdeckung (4) des besagten Hauptkörper (2) im Wesentlichen eine kreisförmige Form haben.

3. Vorrichtung zum Dosieren von Kaffee (1) gemäß Anspruch 2, wobei besagte kompakte Einheit (5) weiter über einen Hohlbereich (10) verfügt, der vertikal um die Mitte der besagten Stützbasis (3) angeordnet ist, wobei besagte Kammern (6) radial um besagten Hohlbereich (10) angeordnet sind.

4. Vorrichtung zum Dosieren von Kaffee (1) gemäß einem der vorherigen Ansprüche, welche weiter einen Hebel (12) umfasst, der geeignet ist, durch besagte Drehung der kompakten Gruppe (5) aktiviert zu werden, um eine der besagten Kammern (6) zu treffen, wenn sie die Kaffeeentladeposition in Entsprechung mit der Entladeöffnung (8) erreicht, um das Austreten von Kaffee, der eventuelle an den Wänden besagter Kammern (6) anklebt, zu erleichtern.

5. Vorrichtung zum Dosieren von Kaffee (1) gemäß einem der vorherigen Ansprüche, welche weiter eine elektronische Platine umfasst, um besagte Drehung der kompakten Einheit (5) mit besagten Kammern (6), sowie die Zeiten für das Ausführen der Lade- und Entladetätigkeiten und der entsprechenden Kaffeedosismengen zu bestimmen.

6. Vorrichtung zum Dosieren von Kaffee (1) gemäß einem der vorherigen Ansprüche, wobei besagte kompakte Einheit (5) in der Lage ist, sowohl im Uhrzeigersinn als auch entgegen dem Uhrzeigersinn gemäß den Entladeanforderungen zu drehen.

7. Verfahren zum Einstellen der Lade- und Entladetätigkeiten in einer Vorrichtung zum Dosieren von Kaffee (1) gemäß einem der Ansprüche 1-6, wobei das Verfahren die folgenden Schritte umfasst:
a) Auswählen der Art und der Anzahl der Kaffeedosen, um aus besagten Kammern (6) entladen zu werden;
b) Drehen der besagten kompakten Einheit (5) von Kammern (6) bis eine mit Kaffeedosen gefüllte Kammer (6) in Entsprechung mit besagter zweiter Entladeöffnung (8) ist, durch Unterbrechung der Drehung und Entladen besagter beladener Kammer (6);
c) Wiederherstellung einer leeren Kammer (6), die das Mahlen einer Kaffeedosis erfordert, entsprechend zur in Schritt b) entladenen Dosis, durch Drehung der besagten kompakten Einheit (5) der Kammern (6) bis besagte leere Kammer (6) in Entsprechung mit besagter erster Ladeöffnung (7) ist und in ihr die Bodendosis belädt.
dadurch ausgezeichnet, dass:
- falls eine doppelte Dosis in der Phase a) angefordert wurde,
vor dem Fortfahren mit dem Schritt c), Schritt b) für eine zweite geladene Kammer (6) wiederholen, um nacheinander eine erste und zweite Kammer (6) zu entladen und anschließend, nachdem die Phase c) einmal ausgeführt wurde, die erste entladene Kammer wiederherzustellen, erneut Schritt c) auszuführen, um die zweite entladene Kammer wiederherzustellen;
oder,
- falls zwei Einzeldosen in der Phase a) angefordert wurden,
nach der Ausführung des Schrittes c), Schritt b) ein zweites Mal wiederholen, um eine zweite geladene Kammer (6) zu entladen und dann Schritt c) ein zweites Mal wiederholen, um eine leere Kammer, die das Mahlen einer Kaffeedosis in Entsprechung zur entladenen Dosis von der zweiten geladenen Kammer erfordert, wiederherzustellen.

## Revendications

1. Dispositif de dosage de café (1) comprenant un corps principal (2) muni d'une base de support (3), d'un couvercle (4) et d'une unité compacte (5) comprenant au moins trois compartiments intégraux essentiellement cylindriques et creux à l'intérieur (6) capables de contenir des doses de café et s'étendant de ladite base de support (3) audit couvercle (4), dans lequel ledit corps principal (2) est muni d'une première ouverture (7) formée dans ledit couvercle (4) et d'une seconde ouverture (8) formée dans ladite base de support (3) et dans lequel ladite unité compacte (5) est capable de tourner autour d'un axe de sorte que lesdits compartiments (6) puissent prendre successivement différentes configurations pour lesquelles, dans chacune desdites configurations, la partie supérieure (9) de seulement un desdits trois compartiments (6) est située au niveau de ladite première ouverture (7) pour être soumise à une action de chargement de la dose de café et seulement un autre des compartiments restants (6) est situé au niveau de ladite seconde ouverture (8) pour être soumis à une action de déchargement de la dose de café, dans lequel le dispositif de dosage de café (1) comprend en outre un moteur (11) conçu pour activer ladite rotation de ladite unité compacte (5) avec lesdits compartiments (6),
**caractérisé par le fait que** ledit moteur (11) est fixé sur ladite base de support (3) dudit corps principal (2), essentiellement autour du centre de celui-ci, et logé dans ladite zone creuse (10) entourée radialement par lesdits compartiments (6).

2. Dispositif de dosage de café (1) selon la revendication 1, dans lequel ladite base de support (3) et ledit couvercle (4) dudit corps principal (2) sont de forme essentiellement circulaire.

3. Dispositif de dosage de café (1) selon la revendication 2, dans lequel ladite unité compacte (5) est également pourvue d'une zone creuse (10) disposée verticalement autour du centre de ladite base de support (3), dans laquelle lesdits compartiments (6) sont disposés radialement autour de ladite zone creuse (10).

4. Dispositif de dosage de café (1) selon l'une quelconque des revendications précédentes, qui comprend également un levier (12) conçu pour être activé par ladite rotation de l'unité compact (5) afin de heurter l'un desdits compartiments (6) lorsqu'il atteint la position de déchargement du café au niveau de l'ouverture de déchargement (8), de manière à faciliter l'écoulement de tout le café éventuellement collé sur les parois dudit compartiment (6).

5. Dispositif de dosage de café (1) selon l'une quelconque des revendications précédentes, qui comprend également une carte électronique pour déterminer ladite rotation de l'unité compacte (5) avec lesdits compartiments (6), ainsi que les temps d'exécution des actions de chargement et de déchargement et les quantités correspondantes de doses de café.

6. Dispositif de dosage de café (1) selon l'une quelconque des revendications précédentes, dans lequel ladite unité compacte (5) est capable de tourner à la fois dans le sens des aiguilles d'une montre et dans le sens inverse des aiguilles d'une montre en fonction des exigences de déchargement.

7. Procédé de réglage des actions de chargement et de déchargement dans un dispositif de dosage de café (1) selon l'une quelconque des revendications 1 à 6, ledit procédé comprenant les étapes suivantes :
a) sélection du type et de la quantité de doses de café à décharger desdits compartiments (6) ;
b) rotation de ladite unité compacte (5) de compartiments (6) jusqu'à ce qu'un compartiment (6) rempli de doses de café soit au niveau de ladite seconde ouverture de déchargement (8), interruption de la rotation et déchargement dudit compartiment chargé (6) ;
c) restauration d'un compartiment vide (6), nécessitant la mouture d'une dose de café équivalente à la dose déchargée à l'étape b), rotation de ladite unité compacte (5) de compartiments (6) jusqu'à ce que ledit compartiment vide (6) soit au niveau de ladite première ouverture de chargement (7) et chargement dans celle-ci de la dose moulue,
**caractérisé par le fait que** :
- si une double dose a été demandée lors de l'étape a),
avant de passer à l'étape c), répéter l'étape b) pour un deuxième compartiment chargé (6), afin de décharger consécutivement un premier et un deuxième compartiment chargé (6), et ensuite, après avoir effectué une fois l'étape c) pour restaurer le premier compartiment déchargé, effectuer à nouveau l'étape c) pour restaurer le deuxième compartiment déchargé ;
ou bien,
- si deux doses simples ont été demandées lors de l'étape a),
après avoir effectué l'étape c), répéter l'étape b) une seconde fois pour décharger un deuxième compartiment chargé (6), puis répéter l'étape c) une seconde fois pour restaurer un compartiment vide nécessitant la mouture d'une dose de café équivalente à la dose déchargée du deuxième compartiment chargé.
